# EUROPÄISCHE PATENTSCHRIFT

(11) **EP 2 601 085 B1**
(45) Veröffentlichungstag und Bekanntmachung des Hinweises auf die Patenterteilung: **29.10.2014**
(21) Anmeldenummer: 11730589.6
(22) Anmeldetag: 07.07.2011
(51) Int. Cl.: B60T 13/58, B60T 13/74, F16D 55/226, F16D 65/14, B60T 7/08

(54) **FAHRZEUGBREMSSYSTEM FÜR EIN KRAFTFAHRZEUG UND VERFAHREN ZUM ANSTEUERN DES FAHRZEUGBREMSSYSTEMS BEIM LÖSEN DER FESTSTELLBREMSFUNKTION**
VEHICLE BRAKE SYSTEM FOR A MOTOR VEHICLE AND METHOD FOR ACTUATING THE VEHICLE BRAKE SYSTEM DURING RELEASE OF THE PARKING BRAKE FUNCTION
SYSTÈME DE FREINAGE POUR UN VÉHICULE AUTOMOBILE ET PROCÉDÉ DE COMMANDE DU SYSTÈME DE FREINAGE DU VÉHICULE LORS DE LA LIBÉRATION DE LA FONCTION DE FREIN DE STATIONNEMENT

(30) Priorität: 03.08.2010 DE 102010033273
(43) Veröffentlichungstag der Anmeldung: 12.06.2013
(73) Patentinhaber: Lucas Automotive GmbH, 56070 Koblenz (DE)
(72) Erfinder: SCHWARZ, Michael, 56070 Koblenz (DE); SCHMIDT, Holger, 56479 Oberrod (DE)
(74) Vertreter: Thum, Bernhard
(86) Internationale Anmeldenummer: PCT/EP2011/003389
(87) Internationale Veröffentlichungsnummer: WO 2012/016621

(56) Entgegenhaltungen:
- EP-A1- 1 777 133
- DE-A1-102005 042 282

## Beschreibung

Die vorliegende Erfindung betrifft ein Fahrzeugbremssystem mit einer hydraulisch ansteuerbaren Scheibenbremseinrichtung, die eine elektromechanische Betätigungseinrichtung zur Aktivierung einer Feststellbremsfunktion aufweist, wobei das Fahrzeugbremssystem einen Hydraulikkreis mit einer Hydraulikdruckquelle sowie ansteuerbaren hydraulischen Funktionselementen aufweist, um nach Maßgabe einer Betriebsbremsaktion eines Fahrers oder einer automatischen Aktivierung die Scheibenbremseinrichtung hydraulisch anzusteuern, wobei das Fahrzeugbremssystem ferner eine Steuereinrichtung aufweist, um nach Maßgabe einer Feststellbremsaktion des Fahrers oder einer automatischen Aktivierung der Feststellbremsfunktion die elektromechanische Betätigungseinrichtung anzusteuern. Die Erfindung betrifft ferner ein Verfahren zum Ansteuern eines Fahrzeugbremssystems der vorstehend beschriebenen Art.

Fahrzeugbremssysteme sind in vielfältiger Weise aus dem Stand der Technik bekannt. Konkret beschreibt das Dokument DE 10 2005 051 082 A1 ein Fahrzeugbremssystem mit einer Schreibenbremse, die als Schwimmsattel-Scheibenbremse ausgeführt ist. Dabei ist eine Reibbelaganordnung mit zwei gegenüberliegenden Reibbelägen beidseits einer Bremsscheibe vorgesehen. Der eine Bremsbelag liegt an einem Schwimmsattel an, wohingegen der andere Bremsbelag sich relativ zum Schwimmsattel über einen Betätigungskolben hydraulisch verlagern lässt. In Folge einer hydraulischen Beaufschlagung eines Betätigungskolbens wird der bewegliche Bremsbelag auf die Bremsscheibe zu verlagert. Der schwimmsattelfeste Bremsbelag wird in an sich bekannter Weise über die Schwimmsattelfunktion von der anderen Seite gegen die Bremsscheibe gezogen, so dass beidseits auf die Bremsscheibe eine Bremskraft einwirkt.

Zusätzlich zu dieser längst bekannten Schwimmsattelfunktion sieht dieser Stand der Technik darüber hinaus aber auch eine elektromechanische Betätigungsvorrichtung vor. Diese wird dazu verwendet, um eine Feststellbremsfunktion zu realisieren. Bei entsprechender Ansteuerung lässt sich neben der hydraulischen Verlagerung die Scheibenbremse auch noch elektromechanisch betätigen. Die elektromechanische Betätigungsvorrichtung ist üblicherweise mit einer Selbsthemmung versehen, so dass dann, wenn die Feststellbremsfunktion aktiviert und die Bremse zugespannt wurde, das System im Feststellbremszustand verharrt und sich nicht selbstständig aus diesem löst. Dadurch ist gewährleistet, dass nach dem Abstellen des Fahrzeugs und bei aktivierter Feststellbremse dieser Zustand aufrechterhalten bleibt. Zum Lösen der Feststellbremsfunktion muss die Selbsthemmung dann überwunden werden.

Es hat sich aber gezeigt, dass es beim Lösen der Feststellbremsfunktion zu Problemen kommen kann, wenn mittels der elektromechanischen Betätigungseinrichtung die Selbsthemmung überwunden werden soll. Dies liegt daran, dass sich die Feststellbremsfunktion bei Erreichen oder Überschreiten der erforderlichen Betätigungskraft zur Überwindung der Selbsthemmung ruckartig beziehungsweise schlagartig löst. Dies spürt der Fahrer als abruptes Lösen der Feststellbremse, was als Komfortverlust bei Anfahrvorgängen empfunden werden kann, insbesondere dann, wenn der Anfahrvorgang bergabwärts erfolgt. Bei einem abrupten Lösen der Feststellbremse kommt es zu einer entsprechend starken Beschleunigung, die durch die Hangabtriebskraft verstärkt wird. Um dies zu vermeiden müsste der Fahrer mit einem aktiven Bremsvorgang eingreifen.

Aus dem Dokument DE 10 2005 042 282 Al ist ferner eine Bremsanlage bekannt, bei der zur Erhöhung der Dynamik des Lösevorgangs die Bremsfunktion einer Feststell- bremse auf eine hydraulische Betriebsbremse übertragen wird, welche anschließend mit einer hohen Dynamik gelöst wird.

Im Dokument EP 1 777 133 Al ist weiterhin ein Fahrzeug offenbart, das ein Bremssteuersystem umfasst, welches eine gesteuerte Hangabfahrt ermöglicht.

Es ist Aufgabe der vorliegenden Erfindung, eine Scheibenbremseinrichtung der eingangs bezeichneten Art bereitzustellen, bei der ein abruptes Lösen der Feststellbremsfunktion wirkungsvoll verhindert werden kann.

Diese Aufgabe wird durch eine Scheibenbremse der eingangs bezeichneten Art ge- löst, bei der vorgesehen ist, dass die Steuereinrichtung dazu ausgebildet ist, wenigs- tens eines der hydraulischen Funktionselemente derart anzusteuern, dass zum Lösen der Feststellbremsfunktion durch Ansteuern der elektromechanischen Betätigungsein- richtung ein in den Scheibenbremseinrichtungen vorhandenes Hydraulikfluidvolumen zum Erzeugen eines vorbestimmten Hydraulikdrucks hydraulisch während des Lösens der Feststellbremsfunktion mittels der elektromechanischen Betätigungseinrichtung

isolierbar bzw. einsperrbar ist und der Hydraulikdruck anschließend nach Maßgabe einer vorgegebenen oder variablen Kennlinie abbaubar ist.

Erfindungsgemäß ist also vorgesehen, dass vor dem Lösen der Feststellbremsfunktion das im Hydraulikkreis bzw. in den Scheibenbremseinrichtungen vorhandene Hydraulikfluidvolumen isoliert wird. Beim Lösen der Feststellbremsfunktion durch Aktivieren der elektromechanischen Betätigungseinrichtung verkleinert sich das Volumen in der Scheibenbremseinrichtung, wodurch ein bestimmter Hydraulikdruck aufgebaut wird. Wird also beim Lösen der Feststellbremsfunktion eine hinreichend große Betätigungskraft aufgebracht, so dass die Selbsthemmung überwunden wird, so löst sich die Feststellbremse zunächst soweit, bis der Betätigungskolben der Scheibenbremseinrichtung sozusagen vom herrschenden Hydraulikdruck in der Scheibenbremseinrichtung aufgefangen wird. Dies bedeutet, dass sich die Scheibenbremseinrichtung bei Überwindung der Selbsthemmung nicht abrupt vollständig lösen kann, sondern aufgrund des herrschenden Hydraulikdrucks, der durch das isolierte beziehungsweise eingesperrte Hydraulikfluidvolumen bestimmt wird, noch in einem hydraulisch gespannten Zustand gehalten wird. Wird sodann das isolierte (eingesperrte) Hydraulikfluidvolumen schrittweise, kontinuierlich oder geregelt anhand einer bestimmten Kennlinie freigegeben, so lässt sich die Feststellbremsfunktion sanft lösen, was letztendlich abrupte Vorgänge vermeidet. Fährt der Fahrer beispielsweise bergabwärts an, so kann dieses sanfte Lösen der Feststellbremsfunktion verhindern, dass das Fahrzeug abrupt beschleunigt.

Erfindungsgemäß kann vorgesehen sein, dass der Hydraulikkreis eine Mehrzahl von ansteuerbaren Ventilen aufweist, um wahlweise in einzelnen Scheibenbremseinrichtungen des Fahrzeugbremssystems gemäß vorstehender Schilderung beim Lösen der Feststellbremsfunktion Hydraulikdruck durch Isolieren des Hydraulikfluidvolumens aufzubauen. Üblicherweise werden die Ventile im Rahmen einer Betriebsbremsung nach Maßgabe der Vorgaben eines Schlupfregelsystems angesteuert. In diesem Zusammenhang kann erfindungsgemäß vorgesehen sein, dass die Ventile über die Steuereinrichtung derart ansteuerbar sind, dass lediglich diejenigen Scheibenbremseinrichtungen des Fahrzeugbremssystems hydraulisch isolierbar sind, die mit einer mechanischen Betätigungseinrichtung ausgeführt sind. Dies sind in der Regel die Scheibenbremseinrichtungen an den Hinterrädern.

Wie vorstehend bereits angedeutet, ist es erfindungsgemäß möglich, dass die Steuereinrichtung mit einer Schlupfregelfunktion ausgebildet ist. Dabei kann vorgesehen sein, dass das Hydraulikvolumen zum Lösen der Feststellbremsfunktion mittels wenigstens eines der Schlupfregelfunktion zugeordneten Ventils isolierbar ist. Bei dem Ventil kann es sich beispielsweise um ein Bremskreis-Absperrventil oder ein ABS-Einlassventil eines Schlupfregelsystems handeln.

Die Erfindung betrifft ferner ein Verfahren zum Ansteuern eines Fahrzeugbremssystem zum Lösen einer Feststellbremsfunktion der vorstehend beschriebenen Art, umfassend die folgenden Schritte:
- Erfassen eines Befehls zum Lösen einer aktivierten Feststellbremsfunktion,
- Isolieren eines in den Scheibenbremseneinrichtungen vorhandenen Hydraulikfluidvolumens durch Ansteuern des Hydraulikkreises, um beim Lösen der Feststellbremsfunktion einen Hydraulikdruck in den Scheibenbremseinrichtungen auszuüben,
- Aktivieren der elektromechanischen Betätigungseinrichtung zum Lösen der Feststellbremsfunktion und
- Freigeben des Hydraulikvolumens.

Bei diesem erfindungsgemäßen Verfahren ist weiterhin vorgesehen, dass das Freigeben des Hydraulikfluidvolumens nach Maßgabe eines vorgegebenen oder variierbaren Gradienten durchgeführt wird. Der Gradient kann beispielsweise in der elektronischen Steuereinrichtung des Fahrzeugs oder des Fahrzeugbremssystems gespeichert sein. Es kann sich aber auch um einen variablen Gradienten oder um ein Kennlinienfeld handeln, das je nach aktueller Betriebssituation den Verlauf der Freigabe des Hydraulikfluidvolumens bestimmt. Im Einzelnen kann die Freigabe des Hydraulikfluidvolumens über einen längeren oder kürzeren Zeitraum und mit linearem, progressiven oder degressiven Verlauf erfolgen.

In diesem Zusammenhang kann bei dem erfindungsgemäßen Verfahren vorgesehen sein, dass der Gradient nach Maßgabe bestimmter Parameter einstellbar ist, insbesondere basierend auf Parametern, die den Anfahrvorgang repräsentieren. Im einzelnen kann vorgesehen sein, dass die Parameter aktuelle Werte oder/und den zeitlichen Verlauf der Betätigung des Gaspedals oder/und der Betätigung der Kupplung oder/und der Drehzahl des Antriebsmotors oder/und des Moments des Antriebsmotors oder/und der Neigung der Fahrbahn umfassen.

Die Erfindung wird im Folgenden beispielhaft anhand der beiliegenden Figuren erläutert. Es stellen dar:
- Fig. 1: ein Schaltbild eines erfindungsgemäßen Fahrzeugbremssystems, wobei schematisch eine Scheibenbremseinrichtung für ein Vorderrad und eine Scheibenbremseinrichtung für ein Hinterrad gezeigt ist;
- Fig. 2: eine teilweise geschnittene Detailansicht der Scheibenbremseinrichtung für das Hinterrad gemäß Fig. 1 mit entsprechender Feststellbremseinrichtung;
- Fig. 3: den Schaltplan gemäß Fig. 1 im Falle einer Ansteuerung zum Lösen der Feststellbremsfunktion nach dem Einspeisen von Hydraulikfluid; und
- Fig. 4: ein Diagramm zur Erläuterung der Funktionsweise der Erfindung.

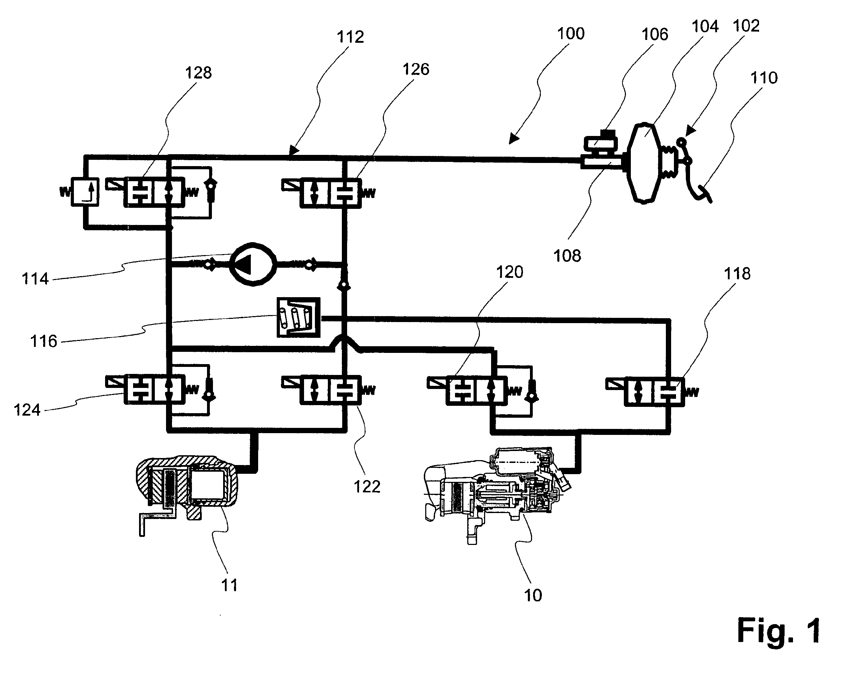

In Fig. 1 ist schematisch ein Schaltplan für ein erfindungsgemäßes Fahrzeugbremssystem 100 gezeigt. Dieses umfasst eine Druckquelle 102, die mit einem Bremskraftverstärker 104, einem Reservoir 106, einem Hauptbremszylinder 108 und einem vom Fahrer betätigbaren Bremspedal 110 ausgebildet ist. Die Druckquelle 102 ist hydraulisch mit einem hydraulischen Bremskreis 112 gekoppelt. Dieser weist eine motorisch ansteuerbare Pumpe 114 auf, sowie einen Druckspeicher 116. Man erkennt ferner zwei Scheibenbremseinrichtungen, nämlich eine Scheibenbremseinrichtung 10 für ein Hinterrad, sowie eine Scheibenbremseinrichtung 11 für ein Vorderrad.

Den Scheibenbremseinrichtungen 10, 11 sind jeweils über eine nicht gezeigte Steuereinrichtung ansteuerbare Ventile 118, 120, 122, 124 zugeordnet. Ferner erkennt man noch Einlassventile 126 und 128, die es ermöglichen, den hydraulischen Bremskreis 112 von der vom Fahrer betätigbaren Druckquelle 102 hydraulisch abzukoppeln.

Hinsichtlich der Betriebsbremsfunktion arbeitet das schematisch gezeigte Fahrzeugbremssystem 100 in an sich bekannter Weise. Die nicht gezeigte Steuereinrichtung bietet ferner eine Schlupfregelfunktion, um Antiblockierregelungen (ABS), Antriebsschlupfregelungen (ASR), Fahrdynamikregelungen (ESP) sowie automatische Bremsungen, z.B. für eine adaptive Geschwindigkeitsregelung (ACC), durchführen zu können.

Im Folgenden wird zum besseren Verständnis im Detail auf den Aufbau der Scheibenbremseinrichtung 10 am Hinterrad eingegangen.

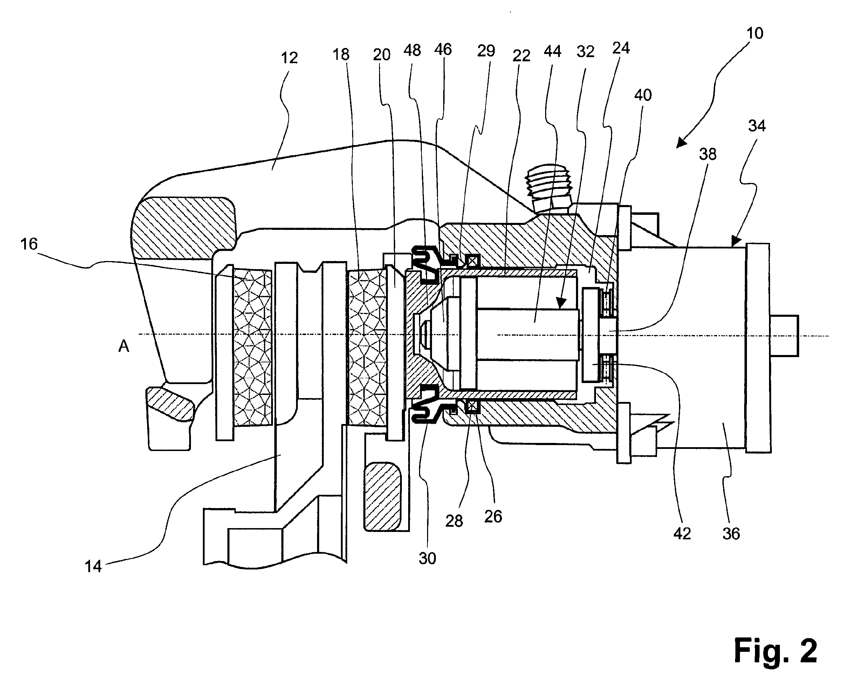

In Fig. 2 ist die erfindungsgemäße Scheibenbremseinrichtung 10 in Teilschnittansicht dargestellt. Diese umfasst einen über einen nicht gezeigten Bremsenträger in üblicher Weise schwimmend gelagerten Bremssattel 12, der eine mit einem Fahrzeugrad drehfest gekoppelte Bremsscheibe 14 überspannt. In dem Bremssattel 12 ist eine Bremsbelaganordnung vorgesehen, die einen am Bremssattel 12 anliegenden Bremsbelag 16 und einen an einem Betätigungskolben 22 anliegenden Bremsbelag 18 aufweist. Die beiden Bremsbeläge 16 und 18 sind einander zugewandt und in der in Fig. 2 gezeigten Lösestellung mit geringem Lüftspiel beidseits der Bremsscheibe 14 angeordnet, so dass keine nennenswerten Restschleifmomente auftreten. Der bewegbare Bremsbelag 18 ist über einen Bremsbelagträger 20 an einem Betätigungskolben 22 zur gemeinsamen Bewegung angeordnet. Der Betätigungskolben 22 ist in einem zylindrischen Hohlraum 24 im Bremssattel 12 verschiebbar gelagert. Im bremsscheibennahen Bereich dieses Hohlraums 24 ist eine umlaufende Aufnahmenut 26 vorgesehen, in der ein ringförmiges Dichtungselement 28 aufgenommen ist. Man erkennt ferner, dass der Betätigungskolben 22 an seinem in Fig. 2 linken, der Bremsscheibe 14 zugewandten Ende mit einem umlaufenden Balg 30 versehen ist, der verhindert, dass Schmutz in den Bereich zwischen dem Betätigungskolben 22 und die den Aufnahmehohlraum 24 des Bremssattels 12 definierende umlaufende Wand eindringen kann.

In Fig. 2 erkennt man ferner, dass der Betätigungskolben 22 hohl ausgebildet ist. In diesem ist ein Druckstück 32 einer elektromechanischen Betätigungsanordnung 34 aufgenommen. Die elektromechanische Betätigungsanordnung 34 umfasst eine Antriebsbaugruppe 36 mit einem Elektromotor und einer Getriebeanordnung. Eine Ausgangswelle 38 dieser Antriebsbaugruppe 36 treibt eine über ein Axiallager 40 abgestützte Antriebsspindel 42 an, die in einer Gewindeaufnahme 44 des Druckstücks 32 gewindemäßig aufgenommen ist.

Das Druckstück 32 weist in seinem in Fig. 2 linken der Bremsscheibe 14 zugewandten Bereich einen konischen Abschnitt 46 auf, der mit einer komplementär konischen Innenoberfläche 48 des Betätigungskolbens 22 in Anlage bringbar ist. In der in Fig. 2 gezeigten Lösestellung besteht ein Spiel zwischen den beiden konischen Flächen 46 und 48.

Wird nun die Bremse vom Fahrer über das Bremspedal oder automatisch über ein Fahrassistenzsystem (z.B. ACC oder Hill-hold mit Bergan- bzw. Bergabfahrhilfe) oder ein Sicherheitssystem (z.B. ESP) hydraulisch betätigt, so wird in dem Hohlraum 24 in an sich bekannter Weise ein Hydraulikdruck aufgebaut, so dass sich der Betätigungskolben 22 entlang der Längsachse A in Fig. 2 nach links verlagert. In der Folge wird mit der Schwimmsattelanordnung in an sich bekannter Weise der Bremsbelag 18 auf die Bremsscheibe 14 gedrückt und dabei der Bremsbelag 16 durch entsprechende Verlagerung des Bremssattels 12 auf der anderen Seite der Bremsscheibe 14 gegen diese gezogen.

Durch die Beaufschlagung des Innenraums 24 mit unter Druck stehendem Hydraulikfluid wird der Betätigungskolben 22 in Fig. 2 entlang der Längsachse A nach links verschoben, so dass es zu einer Bremswirkung kommt. Das radial äußere Dichtelement 28 verformt sich unter dem anliegenden Druck und durch die Bewegung des Betätigungskolbens 22 elastisch in den Bereich einer fasenförmigen Aussparung 29 hinein.

Wird nun beispielsweise durch Freigeben des Bremspedals oder Deaktivierung des Fahrassistenz- bzw. Sicherheitssystems der hydraulische Druck im Innenraum 24 des Bremssattels 12 reduziert, so kann sich das Dichtelement 28 wieder elastisch entspannen und nimmt seine Ausgangsform entsprechend Fig. 2 ein. Dies bedeutet, dass es im Rahmen seiner elastischen Entspannung den Betätigungskolben 22 aus der Betätigungsstellung aufgrund der gegenseitigen Reibanlage wieder zurückzieht und so die Scheibenbremseinrichtung in ihren Ausgangszustand versetzt. Dies entspricht der an sich bekannten Rollback-Funktion, die bei herkömmlichen Bremsen über die Außendichtung 28 am Außenumfang des Betätigungskolbens 22 erzielt wird.

Hinsichtlich einer Aktivierung der Feststellbremsfunktion sind zwei Fälle zu unterscheiden: Sofern kein hydraulischer Druck im Inneren 24 der Scheibenbremseinrichtung 10 anliegt und den Betätigungskolben 22 vorspannt, wird gemäß der Erfindung zur Aktivierung der Feststellbremsfunktion allein die elektromechanische Betätigungseinrichtung 34 angesteuert. Liegt allerdings ein hydraulischer Druck an der Scheibenbremseinrichtung 10 an und spannt den Betätigungskolben 22 vor, beispielsweise weil ein Fahrer vor Aktivierung der Feststellbremsfunktion das Bremspedal niedergedrückt hat oder eine automatische Bremsung durchgeführt wurde, so wird der betriebsbremsungsbedingt herrschende Druckzustand im Innenraum 24 zur Aktivierung der Feststellbremsfunktion ausgenützt.

Dabei wird die elektromechanische Betätigungseinrichtung 34 angesteuert. Unter der Wirkung der elektromechanischen Betätigungseinrichtung 34 verlagert sich das Druckstück 32 nach vorne, bis das Spiel aufgebraucht ist und sich die konische Fläche 46 an die korrespondierende konische Fläche 48 im Inneren des Betätigungskolbens 22 anlegt. Dadurch wird erreicht, dass sich der Betätigungskolben 22 über das Druckstück 32 und das Axiallager 40 am Gehäuse des Bremssattels 12 axial abstützt. Sodann bewegt das Druckstück 32 den Betätigungskolben 22 weiter nach vorne, um die gewünschte Feststellbremswirkung zu erreichen.

Der Feststellbremszustand wird aufgrund der Position des Druckstücks 44 und der Selbsthemmung (beispielsweise durch ein selbsthemmendes Getriebe zwischen Spindel 42 und Aufnahme 44) aufrechterhalten. Die gegen die Bremsscheibe 14 drückenden Bremsbeläge 16, 18 stützen sich über das Druckstück 32 ab.

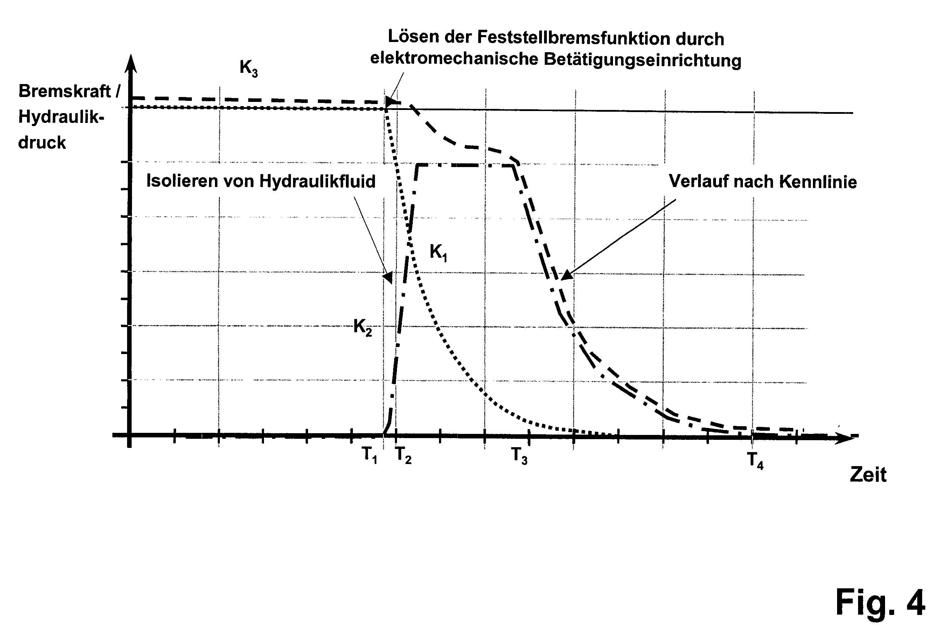

Soll nun der Feststellbremszustand wieder gelöst werden, so wird die im Selbsthemmungszustand befindliche elektromechanische Betätigungseinrichtung 34 angesteuert. Die Vorgänge zum Lösen des Feststellbremszustands sind im Einzelnen in Fig. 4 anhand von Kurven gezeigt, wobei die Kurve K₁ (Punktlinie) die mit der elektromechanischen Betätigungseinrichtung erzeugte Spannkraft repräsentiert, die Kurve K₂ (Strichpunktlinie) die durch Isolieren von Hydraulikfluid erzeugte Spannkraft repräsentiert und die Kurve K₃ (Strichlinie) die aktuell vorliegende Gesamtspannkraft repräsentiert.

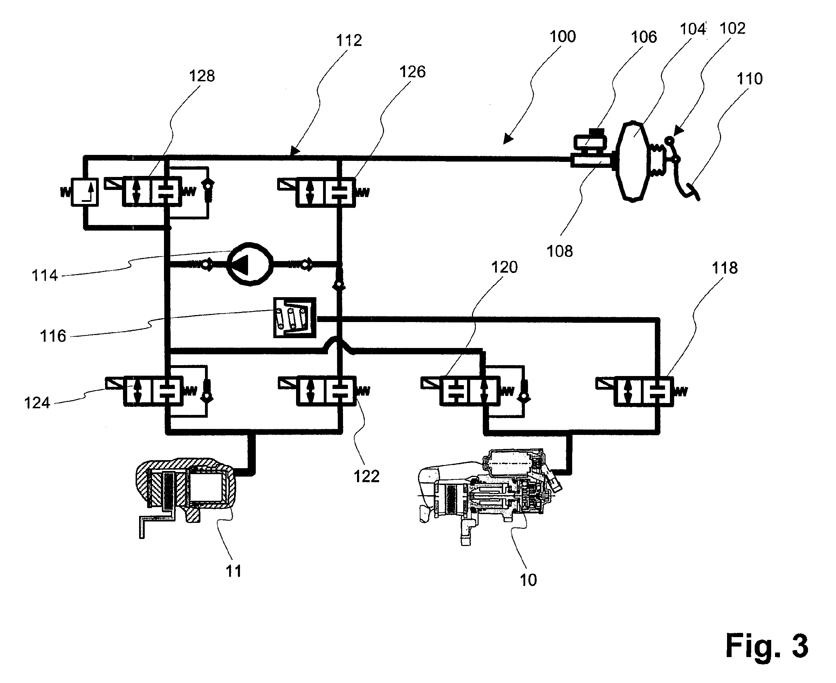

Wie in Fig. 4 gezeigt wird zum Zeitpunkt T₁ durch Aktivierung der elektromechanischen Betätigungseinrichtung 34 zum Lösen der Feststellbremsfunktion gemäß Kurve K₂ ein Hydraulikfluidvolumen in dem Innenraum 24 isoliert, in dem das Bremskreis-Absperrventil 128 abgesperrt wird, wie in Fig. 3 dargestellt. Dadurch wird der herrschende Hydraulikdruck im Innenraum 24 zunächst aufrechterhalten. Wird nun die elektromechanische Betätigungseinrichtung 34 weiter angesteuert, so erreicht diese zum Zeitpunkt T₂ eine Betätigungskraft, die die vorstehend genannte Selbsthemmung überwindet. Es kommt in der Folge zum Lösen der Feststellbremsfunktion.

Sobald die Selbsthemmung überwunden ist, neigt das System unter der Wirkung der elektromechanischen Betätigungsvorrichtung 34 dazu, sich relativ schnell zu lösen. Allerdings kommt es mit der Erfindung zu keinem unerwünscht starken oder abrupten Lösevorgang, weil der Betätigungskolben 22 von dem im Innenraum 24 herrschenden Hydraulikdruck an einer abrupten Rückstellbewegung gehindert wird. Er wird sozusagen von dem im Innenraum 24 eingesperrten Hydraulikfluidvolumen und dem herrschenden Hydraulikdruck aufgefangen, wie durch den Verlauf der Kurve K₃ gezeigt. Mit anderen Worten kann das Hydraulikfluid durch Schließen des Bremskreis-Absperrventils 128 (TC-Iso) zunächst eingesperrt (isoliert) werden. Optional kann auch das der Scheibenbremseinrichtung 11 zugeordnete Einlassventil 124 (ABS-Iso) geschlossen werden, wie in Fig. 3 dargestellt. Der Feststellbremswirkung wird also zu einem bestimmten Grad hydraulisch trotz Lösen der Selbsthemmung aufrechterhalten. Sodann ist es möglich, ab dem Zeitpunkt T₃ diese hydraulisch aufrechterhaltene Feststellbremsfunktion je nach aktueller Betriebssituationen mehr oder weniger schnell abzubauen. Hierzu kann das Bremskreis-Absperrventil 128 (TC-Absperrventil) nach Maßgabe einer vorgegebenen oder variablen Kennlinie angesteuert und entsprechend geöffnet werden. Nach Maßgabe der Öffnung wird das eingesperrte Hydraulikfluid freigegeben und damit der herrschende Hydraulikdruck abgebaut, bis zum Zeitpunkt T₄ keine Bremskraft mehr anliegt. Die Kennlinie kann anhand bestimmter aktueller Parameter, wie beispielsweise dem aktuellen Wert oder dem Verlauf einer Betätigung des Gaspedals oder/und der Kupplung oder/und des Bremspedals verändert werden. Weitere Parameter können sein: die aktuelle Drehzahl oder das aktuelle Drehmoment des Antriebsmotors oder auch die Neigung der Fahrbahn.

Dadurch ist es möglich, das Lösen der Feststellbremsfunktion an den aktuellen Betriebszustand anzupassen. So kann beispielsweise bei einem Anfahrvorgang bergaufwärts die Feststellbremse wesentlich schneller gelöst werden, als bei einem Anfahrvorgang bergabwärts. Diese Charakteristik kann durch das Fahrverhalten noch verändert werden, beispielsweise in Abhängigkeit davon, wie stark der Fahrer das Gaspedal nieder drückt oder wie schnell er die Kupplung freigibt.

## Patentansprüche

1. Fahrzeugbremssystem (100) mit einer hydraulisch ansteuerbaren Scheibenbremseinrichtung (10), die eine elektromechanische Betätigungseinrichtung (34) zur Aktivierung einer Feststellbremsfunktion aufweist, wobei das Fahrzeugbremssystem (100) einen Hydraulikkreis (112) mit einer Hydraulikdruckquelle (102) sowie ansteu- erbaren hydraulischen Funktionselementen (114, 118, 120, 122, 124, 126, 128) aufweist, um nach Maßgabe einer Betriebsbremsaktion eines Fahrers oder einer automatischen Aktivierung die Scheibenbremseinrichtung (10) hydraulisch anzusteu- ern, wobei das Fahrzeugbremssystem (100) ferner eine Steuereinrichtung aufweist, um nach Maßgabe einer Feststellbremsaktion des Fahrers oder einer automatischen Aktivierung der Feststellbremsfunktion die elektromechanische Betätigungseinrich- tung (34) anzusteuern, wobei die Steuereinrichtung dazu ausgebildet ist, wenigstens eines der hydraulischen Funktionselemente (128) derart anzusteuern, dass zum Lösen der Feststellbremsfunktion durch Ansteuern der elektromechanischen Betätigungseinrichtung (34) ein in den Scheibenbremseinrichtungen (10,11) vorhandenes Hydraulikfluidvolumen zum Erzeugen eines vorbestimmten Hydraulikdrucks hydraulisch während des Lösens der Feststellbremsfunktion mittels der elektromechanischen Betätigungseinrichtung isolierbar ist und der Hydraulikdruck anschließend nach Maßgabe einer vorgegebenen oder variablen Kennlinie abbaubar ist.

2. Fahrzeugbremssystem (100) nach Anspruch 1,**dadurch gekennzeichnet, dass** der Hydraulikkreis (112) eine Mehrzahl von ansteuer- baren Ventilen (118, 120, 122, 124, 126, 128) aufweist, um wahlweise einzelne Scheibenbremseinrichtungen (10, 11) des Fahrzeugbremssystems (100) mit Hydrau-likdruck zu beschicken oder hydraulisch zu isolieren.

3. Fahrzeugbremssystem (100) nach Anspruch 2,**dadurch gekennzeichnet, dass** die Ventile (118, 120, 122, 124, 126, 128) über die Steuereinrichtung derart ansteuerbar sind, dass lediglich diejenigen Scheibenbrems- einrichtungen (10, 11) des Fahrzeugbremssystems (100) hydraulisch isolierbar sind, die mit einer mechanischen Betätigungseinrichtung (34) ausgeführt sind.

4. Fahrzeugbremssystem (100) nach einem der vorangehenden Ansprüche, **dadurch gekennzeichnet, dass** die Steuereinrichtung mit einer Schlupfregelfunktion ausgebildet ist.

5. Fahrzeugbremssystem (100) nach Anspruch 2 und 4,
**dadurch gekennzeichnet, dass** das Hydraulikvolumen mittels wenigstens eines der Schlupfregelfunktion zugeordneten Ventils isolierbar ist.

6. Verfahren zum Ansteuern eines Fahrzeugbremssystems zum Lösen einer Feststellbremsfunktion nach einem der vorangehenden Ansprüche, umfassend die folgenden Schritte:
- Erfassen eines Befehls zum Lösen einer aktivierten Feststellbremsfunktion,
- Isolieren eines in den Scheibenbremseneinrichtungen vorhandenen Hydraulikvolumens durch Ansteuern des Hydraulikkreises, um beim Lösen der Feststellbremsfunktion einen Hydraulikdruck in den Scheibenbremseinrichtungen auszuüben,
- Aktivieren der elektromechanischen Betätigungseinrichtung zum Lösen der Feststellbremsfunktion und
- Freigeben des Hydraulikvolumens,
**dadurch gekennzeichnet, dass** das Freigeben des Hydraulikfluidvolumens nach Maßgabe eines vorgegebenen oder variierbaren Gradienten durchgeführt wird.

7. Verfahren nach Anspruch 6,
**dadurch gekennzeichnet, dass** der Gradient nach Maßgabe bestimmter Parameter einstellbar ist, insbesondere basierend auf Parametern, die einen Anfahrvorgang repräsentieren.

8. Verfahren nach Anspruch 7,
**dadurch gekennzeichnet, dass** die Parameter aktuelle Werte oder/und den zeitlichen Verlauf der Betätigung des Gaspedals oder/und der Betätigung der Kupplung oder/und der Drehzahl des Antriebsmotors oder/und des Moments des Antriebsmotors oder/und der Neigung der Fahrbahn umfassen.

## Claims

1. Vehicle brake system (100) with a hydraulically controllable disc brake device (10), which has an electromechanical actuating device (34) for activating a parking brake function, the vehicle brake system (100) having a hydraulic circuit (112) with a hydraulic pressure source (102), as well as controllable hydraulic function elements (114, 118, 120, 122, 124, 126), in order to hydraulically control the disc brake device (10) in accordance with a service brake action of a driver or an automatic activation, the vehicle brake system (100) further having a control device, in order to control the electromechanical actuating device (34) in accordance with a parking brake action of the driver or an automatic activation of the parking brake function,
wherein
the control device is adapted to control at least one of the hydraulic function elements (128) in such a way that, in order to release the parking brake function by controlling the electromechanical actuating device (34), a hydraulic fluid volume present in the disc brake devices (10, 11) can be hydraulically isolated to generate a predetermined hydraulic pressure during the release of the parking brake function by means of the electromechanical actuating device and that the subsequent freeing of the hydraulic fluid volume is carried out in accordance with a preset or variable gradient.

2. Vehicle brake system (100) according to Claim 1,
**characterised in that** the hydraulic circuit (112) has a plurality of controllable valves (118, 120, 122, 124, 126, 128), in order to selectively charge individual disc brake devices (10, 11) of the vehicle brake system (100) with hydraulic pressure or hydraulically isolate them.

3. Vehicle brake system (100) according to Claim 2,
**characterised in that** the valves (118, 120, 122, 124, 126, 128) are controllable via the control device in such a way that only those disc brake devices (10, 11) of the vehicle brake system (100) which are designed with a mechanical actuating device (34) can be hydraulically isolated.

4. Vehicle brake system (100) according to one of the preceding claims, **characterised in that** the control device is formed with a slip control function.

5. Vehicle brake system (100) according to Claim 2 and 4,
**characterised in that** the hydraulic volume can be isolated by means of at least one valve assigned to the slip control function.

6. Method for controlling a vehicle brake system to release a parking brake function according to one of the preceding claims, comprising the following steps:
- detecting a command to release an activated parking brake function,
- isolating a hydraulic volume present in the disc brake devices by controlling the hydraulic circuit in order to exert a hydraulic pressure in the disc brake devices on the release of the parking brake function,
- activating the electromagnetic actuating device to release the parking brake function and
- freeing the hydraulic volume,
**characterised in that** the freeing of the hydraulic fluid volume is carried out in accordance with a preset or variable gradient.

7. Method according to Claim 6,
**characterised in that** the gradient is adjustable in accordance with certain parameters, in particular based on parameters representing a starting process.

8. Method according to Claim 7,
**characterised in that** the parameters comprise current values or/and the time profile of the actuation of the accelerator pedal or/and of the actuation of the clutch or/and of the rotational speed of the drive motor or/and of the torque of the drive motor or/and of the inclination of the road.

## Revendications

1. Système de freinage de véhicule automobile (100) comprenant un dispositif de frein à disque (10) commandé hydrauliquement qui comporte un dispositif d'actionnement électromécanique (34) destiné à actionner une fonction de frein de stationnement, le système de frein de véhicule (100) possédant un circuit hydraulique (112) comportant une source de pression hydraulique (102) et des éléments fonctionnels commandables hydrauliquement (114, 118, 120, 122, 124, 126, 128) afin d'actionner hydrauliquement le dispositif de frein à disque (10) en fonction d'une action exercée sur le frein de service par le conducteur ou d'une activation automatique, ce système de frein de véhicule (100) possédant en outre un dispositif de commande afin de commander le dispositif d'actionnement électromécanique (34) en fonction d'une action exercée sur le frein de stationnement par le conducteur ou d'une activation automatique de la fonction de frein de stationnement, le dispositif de commande étant conçu pour commander au moins un des éléments fonctionnels hydrauliques (128) de telle sorte que, pour libérer la fonction de frein de stationnement en commandant le dispositif d'actionnement électromécanique (34), un volume de fluide hydraulique existant dans les dispositifs de frein à disque (10, 11) peut être isolé hydrauliquement pour produire une pression hydraulique prédéterminée pendant la libération de la fonction de frein de stationnement à l'aide du dispositif d'actionnement électromécanique, et que la pression hydraulique peut être ensuite supprimée en fonction d'une courbe prédéterminée ou variable.

2. Système de freinage de véhicule automobile (100) selon la revendication 1, **caractérisé en ce que** le circuit hydraulique (112) présente une pluralité de vannes (118, 120, 122, 124, 126, 128) pouvant être commandées pour sélectivement isoler hydrauliquement ou alimenter en pression hydraulique différents dispositifs de frein à disque (10, 11) du système de freinage de véhicule automobile (100).

3. Système de freinage de véhicule automobile (100) selon la revendication 2, **caractérisé en ce que** les vannes (118, 120, 122, 124, 126, 128) peuvent être commandées par l'intermédiaire du dispositif de commande de telle sorte que les seuls dispositifs de frein à disque (10, 11) du système de freinage de véhicule automobile (100) à pouvoir être isolés hydrauliquement sont ceux pourvus d'un dispositif d'actionnement électromécanique (34).

4. Système de freinage de véhicule automobile (100) selon l'une des revendications précédentes, **caractérisé en ce que** le dispositif de commande comporte une fonction de réglage de glissement.

5. Système de freinage de véhicule automobile (100) selon les revendications 2 et 4, **caractérisé en ce que** le volume hydraulique peut être isolé au moyen d'au moins une des vannes associées à ladite fonction de réglage de glissement.

6. Procédé de commande d'un système de freinage de véhicule automobile pour la libération de la fonction de frein de stationnement, comportant les étapes suivantes :
- la saisie d'un ordre pour libérer une fonction de frein de stationnement activée,
- l'isolation d'un volume hydraulique existant dans les dispositifs de frein à disque par la commande du circuit hydraulique pour exercer une pression hydraulique dans les dispositifs de frein à disque pendant la libération de la fonction de frein de stationnement,
- l'activation du dispositif d'actionnement électromécanique pour libérer la fonction de frein de stationnement et
- la libération du volume hydraulique,
**caractérisé en ce que** la libération du volume de fluide hydraulique s'effectue en fonction d'un gradient prédéterminé ou variable.

7. Procédé selon la revendication 6,
**caractérisé en ce que** ce gradient peut être réglé en fonction de paramètres déterminés, en particulier sur la base de paramètres qui représentent une opération de démarrage.

8. Procédé selon la revendication 7,
**caractérisé en ce que** les paramètres incluent des valeurs actuelles ou/et l'évolution dans le temps de l'actionnement de l'accélérateur ou/et de l'actionnement de l'embrayage ou/et du régime du moteur d'entraînement ou/et du couple du moteur d'entraînement ou/et de l'inclinaison de la chaussée.
